# EUROPEAN PATENT SPECIFICATION

(11) **EP 3 282 639 B1**
(45) Date of publication and mention of the grant of the patent: **12.02.2020**
(21) Application number: 16776939.7
(22) Date of filing: 11.04.2016
(51) Int. Cl.: H04L 9/30, H04L 9/08, H04L 9/14, H04L 29/08, H04L 9/06, H04W 12/06, H04L 29/06, H04L 9/32

(54) **METHOD FOR OPERATING SERVER AND CLIENT, SERVER, AND CLIENT APPARATUS**
VERFAHREN ZUM BETREIBEN VON SERVER UND CLIENT, SERVER UND CLIENT-VORRICHTUNG
PROCÉDÉ D'EXPLOITATION D'UN SERVEUR ET D'UN CLIENT, SERVEUR ET APPAREIL DE CLIENT

(30) Priority: 10.04.2015 KR 20150051073; 27.07.2015 KR 20150105571; 04.12.2015 KR 20150172151; 05.04.2016 KR 20160041490
(43) Date of publication of application: 14.02.2018
(73) Proprietor: 2IP Co., Ltd., Yongsan-gu Seoul 04419 (KR)
(72) Inventor: KIM, Tae Jung, Seoul 04798 (KR); CHO, Kwang Hyun, Seoul 08254 (KR)
(74) Representative: V.O.
(86) International application number: PCT/KR2016/003763
(87) International publication number: WO 2016/163836

(56) References cited:
- KR-A- 20080 033 239
- KR-A- 20140 026 619
- KR-A- 20140 037 268
- KR-A- 20150 035 143
- US-A1- 2013 275 758
- US-A1- 2014 047 238
- US-B1- 8 627 424

## Description

### Technical Field

Embodiments of the present invention relate to operations of a server and a client.

### Background Art

A current communication method provides a user with a communication service when the users is authenticated or identified based on personal information (for example, a phone number or an e-mail or the like) of the user.

As a related art, there is Korean Patent Application Publication No. 10-2015-0035143 (Title of the Invention: Method for Providing Mobile Telecommunication Service, and Apparatus Therefor, Applicant: SK Telecom). The publication discloses a subscriber information managing apparatus that receives a location registration request with respect to a user device from a mobility managing apparatus, verifies whether the user device subscribes a predetermined mobile telecommunication service based on subscriber profile information of the user device, updates access point name information registered with respect to the user device for a predetermined mobile telecommunication service in a case in which the user device subscribes the predetermined mobile telecommunication service, and provides the subscriber profile information including the updated access point name information to the mobility managing apparatus.

US2014/047238A1 discloses a device authentication server that assigns unique synthetic device attributes to a device such that the device can use actual hardware and system configuration attributes and the assigned synthetic device attributes to form a device identifier that is unique, even among homogeneous devices for which actual, accessible hardware and system configuration attributes are not distinct.

US8627424B1 discloses generating one time passcodes (OTPs) in a security environment, the security environment comprising an OTP generator and an OTP validator, the method comprising generating, at the OTP generator, an OTP according to a function, wherein the function includes as an input a device id, validating the OTP at the OTP validator, whereby the validation comprises generating, at the OTP validator, a second OTP according to the function, and determining whether the OTP is valid based on a comparison of the OTP with the second OTP generated at the OTP validator.

### Disclosure of Invention

### Technical solutions

According to an aspect of the present invention, there is provided an operating method of a server that supports peer-to-peer (P2P) communication as defined in claim 1.

The at least one piece of unique information may include a device unique key corresponding to a physical device of the client and a manufacturing key corresponding to the client.

The security key may be generated based on at least one of the device unique key and the manufacturing key.

The identifier may be one of n-digit random values (n^n) generated based on n pieces of discrimination information.

A hash index may be embedded in the identifier.

A list of one or more other clients authenticated by the server may be displayed in the client, and the client may transmit and receive packets encrypted using the security key to and from the one or more other clients.

The key pair may be stored in at least one of the server and the client.

According to an aspect of the present invention, there is provided an operating method of a client that supports peer-to-peer (P2P) communication as defined in claim 8.

The at least one piece of unique information may include a device unique key corresponding to a physical device of the client and a manufacturing key corresponding to the client.

The security key may be generated based on at least one of the device unique key and the manufacturing key.

The identifier may be one of n-digit random values (n^n) generated based on n pieces of discrimination information.

A hash index may be embedded in the identifier.

A list of one or more other clients authenticated by the server may be displayed in the client, and the client may transmit and receive packets encrypted using the security key to and from the one or more other clients.

A key pair of the public key and the private key may be stored in at least one of the server and the client.

According to an aspect of the present disclosure not forming part of the present invention, there is provided a server including a communication interface configured to communicate with a client, and a controller. The controller may be configured to issue a public key in response to a public key request received from the client, and transmit the public key to the client using the communication interface, receive a private key using the communication interface, and map the public key and the private key as a key pair, receive an identifier generation request including at least one piece of unique information of the client using the communication interface, generate an identifier corresponding to the client in response to the identifier generation request, generate a security key based on the unique information, and transmit the identifier and the security key to the client using the communication interface, receive an authentication request including the identifier and the security key using the communication interface, and authenticate the client in response to the authentication request, and transmit an authentication result to the client using the communication interface. The client may be configured to transition to a state enabling communication with another client based on the authentication result.

The at least one piece of unique information may include a device unique key corresponding to a physical device of the client and a manufacturing key corresponding to the client.

The security key may be generated based on at least one of the device unique key and the manufacturing key.

The identifier may be one of n-digit random values (n^n) generated based on n pieces of discrimination information.

A hash index may be embedded in the identifier.

A list of one or more other clients authenticated by the server may be displayed in the client, and the client may transmit and receive packets encrypted using the security key to and from the one or more other clients.

The key pair may be stored in at least one of the server and the client.

According to another aspect of the present disclosure not forming part of the present invention, there is provided an operating method of a client including transmitting, to a server, contact request data to add a contact and an identifier of the client, receiving, from the server, a key generated in response to the contact request data, the key being mapped to the identifier of the client, performing a predetermined key transfer process for a counterpart client to acquire the key, receiving, from the server, an identifier of the counterpart client, and registering the identifier of the counterpart client in a contact registry. The server may be configured to receive the identifier of the counterpart client and the key from the counterpart client, and transmit the identifier of the counterpart client to the client.

The performing may include generating and displaying a visual code corresponding to the key.

The operating method may further include transmitting, to the server, the identifier of the client, the identifier of the counterpart client, an identifier of a third party, and friend addition request data for friend addition between the counterpart client and the third party.

The friend addition request data may be transmitted to the counterpart client and the third party, and when the counterpart client and the third party each input an approval with respect to the friend addition request data, the identifier of the counterpart client may be transmitted to the third party and the identifier of the third party may be transmitted to the counterpart client.

The operating method may further include receiving, from the server, friend addition request data for friend addition between the client and a third party, transmitting, to the server, response data indicating whether the friend addition request data is approved, receiving an identifier of the third party from the server when the client inputs an approval with respect to the friend addition request data and the third party inputs an approval with respect to the friend addition request data, and registering the identifier of the third party in a contact registry.

The operating method may further include transmitting, to the server, disablement request data to disable communication connection with respect to the identifier of the client registered in a contact registry of the counterpart client when the identifier of the counterpart client is deleted from the contact registry of the client.

An identifier control instruction, corresponding to the disablement request data, to be transmitted to the counterpart client may include at least one of a first instruction to delete the identifier of the client, a second instruction to not display the identifier of the client visually, and a third instruction to disable communication between the client and the counterpart client.

The operating method may further include receiving, from the server, an identifier control instruction to control the identifier of the counterpart client.

The identifier control instruction may include at least one of a first instruction to delete the identifier of the counterpart client, a second instruction to not display the identifier of the counterpart client visually, and a third instruction to disable communication between the client and the counterpart client.

The operating method may further include transmitting, to the server, contact storage request data to back up contact data including at least one identifier registered in the contact registry to the server, receiving, from the server, an identification code and an encryption key generated in response to the contact storage request data, encrypting the contact data using the encryption key, and transmitting, to the server, the identification code and the contact data encrypted using the encryption key. The identification code and the encrypted contact data may be mapped and stored in the server.

The operating method may further include receiving, from the server, updated state information of the counterpart client. The updated state information may indicate that the counterpart client is connectable through a communication session.

According to still another aspect of the present invention not forming part of the present invention, there is provided an operating method of a client including acquiring a key mapped to an identifier of a counterpart client, transmitting the key and an identifier of the client to a server, receiving the identifier of the counterpart client from the server, and registering the identifier of the counterpart client in a contact registry. The key may be generated by the server when the counterpart client transmits, to the server, contact request data to add a contact and the identifier of the counterpart client.

The acquiring may include capturing a visual code generated by the counterpart client, and acquiring the key by decoding the visual code.

According to another aspect of the present disclosure not forming part of the present invention, there is provided an operating method of a server including receiving, from a client, contact request data to add a contact and an identifier of the client, generating a key in response to the contact request data, and mapping the key to the identifier of the client, transmitting the key to the client, receiving, from a counterpart client having acquired the key through a predetermined key transfer process of the client, the key and an identifier of the counterpart client, searching for an identifier mapped to the key, and managing contacts of the client and the counterpart client based on a search result.

The operating method may further include verifying whether the key is valid based on an availability count of the key when the identifier of the client is included in the search result.

The operating method may further include updating the availability count of the key when the key is valid, and transmitting, to the counterpart client, a message indicating that it is impossible to transmit the identifier of the client when the key is invalid.

The managing may include transmitting the identifier of the client to the counterpart client, and transmitting the identifier of the counterpart client to the client.

The managing may include recording friend addition between the client and the counterpart client.

The operating method may further include receiving, from the client, the identifier of the client, the identifier of the counterpart client, and an identifier of a third party, and friend addition request data for friend addition between the counterpart client and the third party, transmitting the friend addition request data to the third party and the counterpart client, receiving, from each of the third party and the counterpart client, response data indicating whether the friend addition request data is approved, and managing contacts of the third party and the counterpart client based on the response data.

The operating method may further include receiving, from the client, disablement request data to disable communication connection with respect to the identifier of the client registered in the counterpart client, generating a contact control instruction corresponding to the disablement request data, and transmitting the contact control instruction to the counterpart client.

The contact control instruction may include at least one of a first instruction to delete the identifier of the client, a second instruction to instruct the counterpart client to not display the identifier of the client visually, and a third instruction to disable communication between the client and the counterpart client.

The operating method may further include receiving, from the client, contact storage request data to back up contact data including at least one identifier registered in a contact registry of the client, generating an identification code and an encryption key to be used to encrypt the contact data in response to the contact storage request data, transmitting the identification code and the encryption key to the client, receiving, from the client, the identification code and contact data encrypted using the encryption key, and mapping and storing the identification code and the encrypted contact data.

The operating method may further include receiving the identification code and contact restoration request data from a client other than the client, searching for contact data mapped to the identification code, transmitting the encrypted contact data to the other client based on a search result, receiving, from the other client, registration request data to register contact data decrypted using the encryption key, and registering the decrypted contact data to correspond to the other identifier.

The operating method may further include updating state information of the counterpart client when the counterpart client accesses the server, and transmitting the updated state information to the client. The updated state information may indicate that the counterpart client is connectable through a communication session.

### Effect

Embodiments may provide a secure communication platform that may assign a communicable identifier without receiving an input of personal information of the user. Further, embodiments may provide an identifier based communication service, rather than a phone number based communication service, by assigning an identifier to communication software (or firmware).

### Brief Description of Drawings

FIG. 1 is a flowchart illustrating operations of a client and a server according to an embodiment.
FIG. 2 is a flowchart illustrating an example of a process for identifier assignment and client authentication according to an embodiment.
FIG. 3 is a flowchart illustrating an example of contact addition according to an embodiment.
FIG. 4 is a flowchart illustrating another example of contact addition according to an embodiment.
FIG. 5 is a flowchart illustrating an example of contact disablement according to an embodiment.
FIG. 6 is a flowchart illustrating an example of contact backup according to an embodiment.
FIG. 7 is a flowchart illustrating an example of contact restoration according to an embodiment.
FIG. 8 is a diagram illustrating an example of a security call dongle according to an embodiment.
FIG. 9 is a flowchart illustrating an example of an operating method of a client according to an embodiment.
FIG. 10 is a flowchart illustrating another example of an operating method of a client according to an embodiment.
FIG. 11 is a flowchart illustrating an operating method of a server according to an embodiment.
FIG. 12 is a block diagram illustrating an example of a client apparatus according to an embodiment.
FIG. 13 is a block diagram illustrating another example of a client apparatus according to an embodiment.
FIG. 14 is a block diagram illustrating an example of a server according to an embodiment.
FIG. 15 is a flowchart illustrating still another example of an operating method of a client according to an embodiment.
FIG. 16 is a block diagram illustrating another example of a server according to an embodiment.

### Best Mode for Carrying Out the Invention

Hereinafter, embodiments will be described in detail with reference to the accompanying drawings.

Various alterations and modifications may be made to the embodiments. Here, the embodiments are not construed as limited to the disclosure and should be understood to include all changes, equivalents, and replacements within the idea and the technical scope of the disclosure.

The terminology used herein is for the purpose of describing particular embodiments only and is not to be limiting of the embodiments. As used herein, the singular forms "a", "an", and "the" are intended to include the plural forms as well, unless the context clearly indicates otherwise. It will be further understood that the terms "include/comprise" and/or "have" when used in this specification, specify the presence of stated features, integers, steps, operations, elements, components, and/or combinations thereof, but do not preclude the presence or addition of one or more other features, numbers, steps, operations, elements, components, and/or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. When it is determined detailed description related to a related known function or configuration they may make the purpose of the embodiments unnecessarily ambiguous in describing the embodiments, the detailed description will be omitted here.

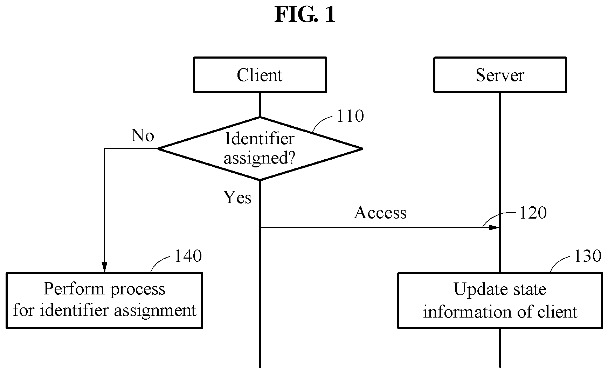

FIG. 1 is a flowchart illustrating operations of a client and a server according to an embodiment.

A client may be, for example, a communication application that enables a communication service. The communication service may include peer-to-peer (P2P) communication with another client.

In a case in which a client is initially installed and executed on a terminal, the client verifies whether an identifier is assigned, in operation 110. For example, the client may verify whether an identifier is stored in a memory.

In response to verification that an identifier is assigned, the client accesses a server, in operation 120. The client may transmit an identifier of the client and an Internet Protocol (IP) address to the server to access the server.

When the client accesses the server, the server updates state information of the client, in operation 130. For example, the server may change the state information of the client to an "online state". In other words, the server may change state information with respect to the identifier from an "offline state" to the "online state". The server may transmit the updated state information of the client to another client. The other client may display that the client is in the online state on a display. That is, the other client may display, on the display, that the state information of the identifier of the client corresponds to the online state.

Although not shown in FIG. 1, when the execution of the client is terminated (for example, in a case in which a user stops the execution of the client, etc), the client may transmit, to the server, termination data indicating that the execution is terminated. Here, the client may transmit, to the server, the identifier of the client along with the termination data.

When the server receives the termination data, the server may update the state information of the client. For example, the server may change the state information of the client from the "online state" to the "offline state". The server may transmit the updated state information of the client to another client added as a friend of the client. Thus, the other client may display, on the display, that the client is in the offline state.

Dissimilar to an existing call application, the client may provide the user with a communication service such as a call although personal information of the user is not input. Further, the client may provide the user with a call service without a user authentication process using personal information of the user. In addition, dissimilar to an existing communication service that enables a call only when a phone number is provided, the user may make a call or exchange messages with another user through the client if an identifier is assigned to the client. Here, call packets and the like may be transmitted and received through a communication session (P2P communication session) set between the client and the other client.

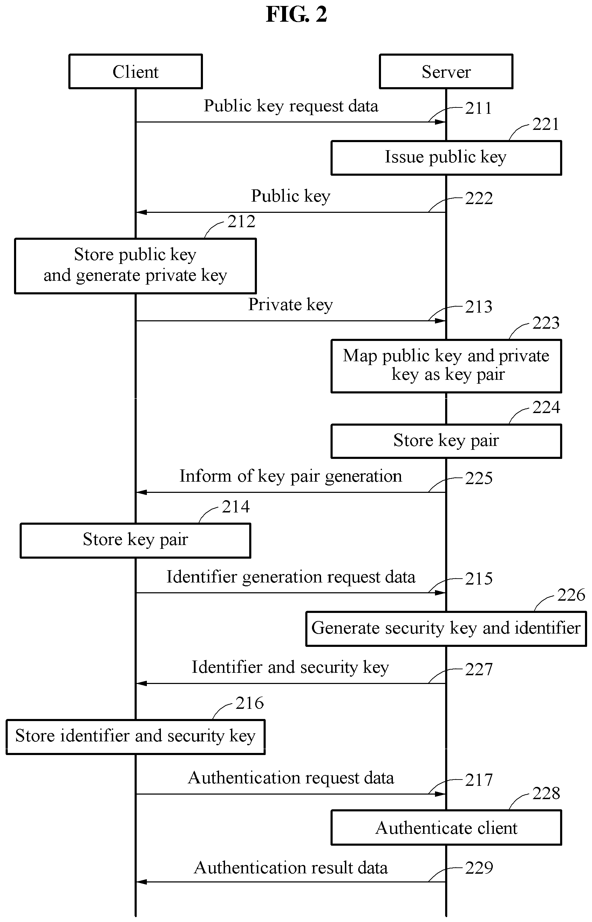

In response to verification that an identifier is not assigned, the client performs a process for identifier assignment with the server, in operation 140. Further, although not shown in FIG. 1, the client performs a process for client authentication after being assigned with the identifier. Hereinafter, a process for identifier assignment and client authentication will be described with reference to FIG. 2.

### <Identifier Assignment and Client Authentication>

FIG. 2 is a flowchart illustrating an example of a process for identifier assignment and client authentication according to an embodiment.

Referring to FIG. 2, a client transmits public key request data to a server, in operation 211. The server issues a public key, in operation 221. The size of the public key may be, for example, 64 bytes, that is, 512 bits. The server transmits the public key to the client, in operation 222.

The client stores the public key and generates a private key, in operation 212. The size of the private key may be, for example, 64 bytes. The client transmits the private key to the server, in operation 213. The client encrypts the private key using the public key, and transmits the encrypted private key to the server. Since the server has the public key, the server decrypts the encrypted private key using the public key.

The server maps the public key and the private key as a key pair, in operation 223. The server stores the key pair in the server, in operation 224. The server transmits, to the client, a message indicating the generation of the key pair, in operation 225. The server may encrypt the message using the private key.

The client may confirm the generation of the key pair through the message. Thus, the client maps the private key and the public key as a key pair, and stores the key pair, in operation 214.

In the example of FIG. 2, the key pair is stored in the client and the server. However, a storage space of the key pair is not limited thereto. For example, the key pair may be stored in one of the client and the server.

The client transmits identifier generation request data to the server, in operation 215. The identifier generation request data is encrypted using the private key. Further, the client transmits, to the server, unique information along with the identifier generation request data. The unique information is included in the identifier generation request data.

The unique information may include, for example, at least one of a device unique key corresponding to a physical device or an operating system (OS) of the client, and a manufacturing key corresponding to the client.

The physical device of the client may include, for example, at least one of a central processing unit (CPU) and a micro processor unit (MPU). The device unique key may be acquired from identification information of the CPU or identification information of the MPU. The OS of the client may have unique information that discriminates the OS of the client from another OS. Accordingly, the client may acquire the device unique key from the unique information of the OS.

The manufacturing key may include a site key, a manufacturer key, and a product key. The site key corresponds to site information. The site information may be, for example, information based on a site IP address. The manufacturer key corresponds to manufacturer information. The manufacturer information may be, for example, identification information of a manufacturer that creates the client. The product key corresponds to version information of the client.

The device unique key and the manufacturing key may each have a predetermined size. For example, the size of the device unique key may be 128 bits, and the size of the manufacturing key may be 208 bits. Similarly, the site key, the manufacturer key, and the product key may each have a predetermined size. For example, the size of the site key may be 80 bits, the size of the manufacturer key may be 64 bits, and the size of the product key may be 64 bits.

The manufacturing key may be configured in an order of the site key, the manufacturer key, and the product key. However, the order of the site key, the manufacturer key, and the product key is merely an example. The order of the site key, the manufacturer key, and the product key is not limited thereto.

When the server receives the identifier generation request data, the server generates a security key and an identifier, in operation 226. The server generates a security key corresponding to the unique information of the client. For example, when the server receives the device unique key and the manufacturing key from the client, the server may generate the security key by modifying the device unique key and the manufacturing key. The server may generate a 256-bit security key based on the 128-bit device unique key and the 208-bit manufacturing key. As described later, in a case in which the client is authenticated, the client may communicate with another client by setting a communication session. The client may encrypt packets using the security key for secure communication. That is, the security key may be used to encrypt packets to be exchanged through the communication session.

The server 120 generates the identifier at random, and assign the identifier to the client. The identifier may be one of n-digit random values (n^n) generated based on n pieces of discrimination information. For example, when 64 pieces of 1-byte discrimination information are provided, the identifier may be one of 64^64 64-digit random values. The server may generate the identifier by arranging the 64 pieces of discrimination information at random. The server may verify whether the identifier overlaps another identifier. If not overlapping, the server may assign the identifier to the client. Thus, the identifier may be unique to each client.

A hash index may be embedded in the identifier. The size of the hash index may be, for example, 64 bits. The server may embed the hash index in the identifier using a conversion logic. For example, the size of the identifier may be 64 bytes. The server may apply the conversion logic to a predetermined bit included in a first byte. In an example, although the conversion logic is applied to a predetermined bit, the predetermined bit may not be changed to another bit. In a case in which the predetermined bit has a first logical value, the predetermined bit may be changed to a second logical value by the conversion logic or maintain the first logical value. The predetermined bit may be, for example, a single bit. The server may apply the conversion logic to a predetermined bit included in remaining bytes. Thus, a portion of a string of the identifier may be changed, and the hash index may be embedded in the identifier. For example, in a case in which the identifier is a string of ABCD, ABCD may be changed to AZDD by the conversion logic, and the hash index may be embedded in AZDD.

When the server generates the identifier and the security key, the server transmits the identifier and the security key to the client, in operation 227. The identifier and the security key are encrypted using the private key.

The client decrypts the identifier and the security key using the private key.

The client may store the identifier and the security key in a memory, in operation 216.

The foregoing is the process for identifier assignment. The client may perform an authentication process with the server to perform identifier-based communication. Hereinafter, the authentication process will be described.

The client transmits authentication request data to the server, in operation 217. Further, the client transmits, to the server, the identifier and the security key along with the authentication request data. The authentication request data, the identifier, and the security key are encrypted using the private key. The identifier and the security key are included in the authentication request data.

The server identifies the identifier and the security key received from the client. In detail, the server may verify whether the identifier and the security key received from the client match the identifier and the security key generated in operation 226.

The server authenticates the client based on the identifier and the security key received from the client, in operation 228, and transmits authentication result data to the client, in operation 229. The authentication result data are encrypted using the private key. In a case in which the client is authenticated, the client may access the server described above, and a communication service may be enabled.

In an embodiment, the identifier is unique information assigned to the client. Thus, when the client is deleted from a terminal and a new client is installed in the terminal, the new client may not use the identifier of the client as its own identifier. Accordingly, the new client may perform the identifier assignment process of FIG. 2 with the server to be assigned with its own identifier, and perform the authentication process with the server.

### <Contact Addition>

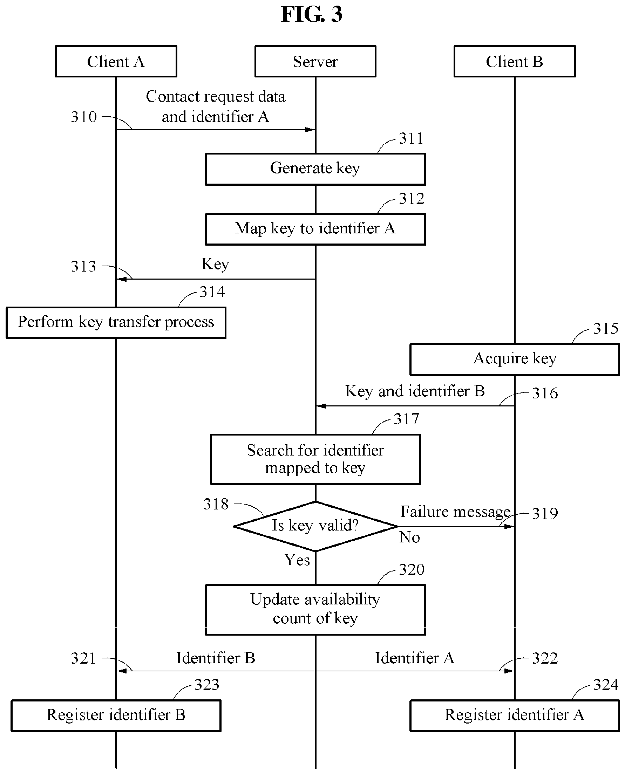

FIG. 3 is a flowchart illustrating an example of contact addition according to an embodiment.

Referring to FIG. 3, a client A transmits, to a server, contact request data to add a contact and an identifier A, in operation 310. The identifier A is an identifier assigned to the client A. Depending on implementation, the identifier A may be included in the contact request data and transmitted to the server.

The server generates a key in response to the contact request data, in operation 311. Further, the server maps the identifier A to the key, in operation 312. The server may map the identifier A to the key and store the same. The server transmits the key to the client A, in operation 313.

When the client A receives the key, the client A performs a key transfer process for a client B to acquire the key, in operation 314. For example, the client A may generate a visual code corresponding to the key by encoding the key, and display the visual code on a display. The visual code may be a code in a form that enables the client B to acquire information through an optical device (for example, a camera), and may include, for example, a one-dimensional (1D) barcode, a two-dimensional (2D) barcode, and/or a three-dimensional (3D) barcode. The 2D barcode may include a quick response (QR) code, a Data Matrix code, and a MaxiCode. In another example, the client A may transmit the visual code to the client B through the server.

The client B acquires the key through the key transfer process, in operation 315. For example, the client B may capture the visual code displayed on the display of the client A, and acquire the key by decoding the visual code.

The client B transmits the key and an identifier B to the server, in operation 316. Here, the identifier B is an identifier assigned to the client B.

The server searches for an identifier mapped to the key, in operation 317. In the example of FIG. 3, the identifier A is mapped to the key. Thus, the identifier A is included in a search result.

The server verifies whether the key is valid, in operation 318. For example, the server may verify whether the key is valid based on an availability count of the key.

The availability count of the key may be set by a user of the client A. In a case in which the availability count of the key is set to "1", the key is used one time. That is, the server generates a key each time the server receives contact request data, which means that a security level is high. In a case in which the availability count of the key is set to an integer greater than "1", the key is used multiple times unless another request of the client A is received. In this example, the server may generate a key when initial contact request data of the client A is received, and may not generate a key when contact request data is received later. Further, the availability count of the key may be set to infinity. In this example, the key is used permanently unless another request of the client A is received, which means that the security level is exceedingly low.

In operation 318, if the availability count of the key is "0", the key is invalid, which means that the client A has transmitted contact request data a number of times exceeding the availability count. In this example, the server transmits, to the client B, a failure message indicating that it is impossible to transmit the identifier A to the client B, in operation 319. Although not shown in FIG. 3, the server may transmit, to the client A, a message to instruct the client A to perform operation 310 again. The client A may retransmit the contact request data and the identifier A to the server in response to the message, and the server may generate a key.

In operation 318, if the availability count of the key is not "0", the key is valid. In this example, the server updates the availability count of the key, in operation 320. For example, the server may subtract" 1" from the availability count of the key.

The server may manage contacts of the client A and the client B. For example, in a case in which the key is valid, the server transmits the identifier B to the client A, in operation 321, and transmits the identifier A to the client B, in operation 322. Further, the server may record friend addition between the client A and the client B. In other words, the server may record friend addition between the identifier A and the identifier B.

When the client A receives the identifier B, the client A registers the identifier B in a contact registry, in operation 323.

When the client B receives the identifier A, the client B registers the identifier A in a contact registry, in operation 324.

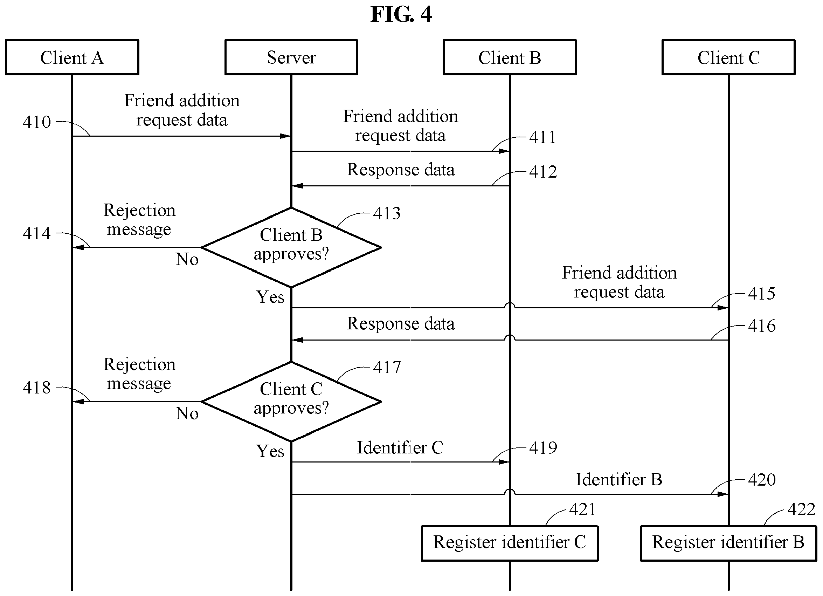

FIG. 4 is a flowchart illustrating another example of contact addition according to an embodiment.

An identifier B and an identifier C may be registered in a contact registry of a client A, the identifier B may not be registered in a contact registry of a client C, and the identifier C may not be registered in a contact registry of a client B. That is, the client A may be added as a friend of each of the client B and the client C, and the client B and the client C may not be added as friends. In this example, the client A may enable the client B and the client C to be added as friends.

The client A may select the identifier B in a contact list, and select the client C as a receiver of the identifier B. Further, the client A may generate a message to be transmitted to a server. Here, the message may include names of respective users of the client A, the client B, and the client C. Hereinafter, another example of contact addition will be described with reference to FIG. 4.

Referring to FIG. 4, the client A transmits, to the server, friend addition request data to transmit the identifier B to the client C, in operation 410. In other words, the friend addition request data may be request data of the client A for friend addition between the client B and the client C. The friend addition request data may include the message generated by the client A.

The client A may transmit, to the server, the identifier A, the identifier B, and the identifier C along with the friend addition request data. Depending on implementation, the identifier A, the identifier B, and the identifier C may be included in the friend addition request data and transmitted to the server.

The server transmits the friend addition request data to the client B, in operation 411.

The client B transmits, to the server, response data indicating whether the friend addition request data is approved, in operation 412. The response data may include, for example, an approval input or a rejection input of the client B. The approval input may indicate an approval with respect to transmission of the identifier B (here, a target to receive the identifier B is the client C), and the rejection input may indicate a rejection with respect to transmission of the identifier B. In other words, the approval input may indicate that the client B approves of being added as a friend of the client C, and the rejection input may indicate that the client B rejects being added as a friend of the client C.

The server verifies whether the client B approves the friend addition request data based on the response data, in operation 413. Here, in a case in which the client B does not approve the friend addition request data, the server transmits a rejection message with respect to the friend addition request data to the client A, in operation 414.

In a case in which the client B approves the friend addition request data, the server transmits the friend addition request data to the client C, in operation 415.

The client C transmits, to the server, response data indicating whether the friend addition request data is approved, in operation 416. The response data may include, for example, an approval input or a rejection input of the client C. The approval input may indicate an approval with respect to transmission of the identifier C (here, a target to receive the identifier C is the client B), and the rejection input may indicate a rejection with respect to transmission of the identifier C. In other words, the approval input may indicate that the client C approves of being added as a friend of the client B, and the rejection input may indicate that the client C rejects being added as a friend of the client B.

The server verifies whether the client C approves the friend addition request data based on the response data, in operation 417. Here, in a case in which the client C does not approve the friend addition request data, the server transmits a rejection message with respect to the friend addition request data to the client A, in operation 418.

In a case in which the client C approves the friend addition request data, the server manages the contacts of the client B and the client C. For example, the server may transmit the identifier C to the client B, in operation 419, and may transmit the identifier B to the client C, in operation 420. Further, the server may record the friend addition between the client B and the client C.

The client B registers the identifier C in the contact registry of the client B, in operation 421, and the client C registers the identifier B in the contact registry of the client C, in operation 422.

In the example of FIG. 4, operation 415 depends on a result of operation 413. That is, in the example of FIG. 4, the server transmits the friend addition request data to the client C based on whether the client B approves the friend addition request data. However, embodiments are not limited thereto. Operation 415 may be performed irrespective of the result of operation 413. For example, the server may transmit the friend addition request data to the client B and the client C simultaneously. Here, when the server receives a response message including a rejection input from one of the client B and the client C, the server may not perform friend addition between the client B and the client C. In a case in which the client B and the client C approve the friend addition request data, the server may transmit the identifier C to the client B, and transmit the identifier B to the client C.

### <Contact Disablement

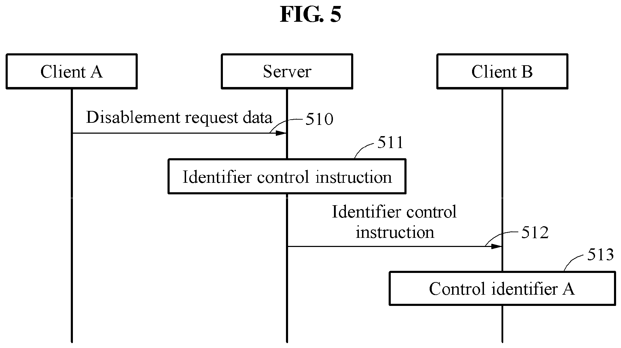

FIG. 5 is a flowchart illustrating an example of contact disablement according to an embodiment.

Referring to FIG. 5, in a case in which an identifier B is deleted from a contact registry of a client A, the client A transmits disablement request data to a server, in operation 510. Here, the disablement request data is data to disable communication connection (for example, P2P communication connection) with respect to an identifier A registered in a contact registry of a client B. Further, the client A may transmit, to the server, the identifier A and the identifier B along with the disablement request data. Depending on implementation, the identifier A and the identifier B may be included in the disablement request data and transmitted to the server.

When the server receives the disablement request data, the server may delete record with respect to friend addition between the client A and the client B.

Further, the server generates an identifier control instruction corresponding to the disablement request data, in operation 511. The identifier control instruction may include, for example, at least one of a first instruction to delete the identifier A, a second instruction to not display the identifier A visually, and a third instruction to disable communication (for example, P2P communication) between the client A and the client B.

The server transmits the identifier control instruction to the client B, in operation 512.

The client B controls the identifier A based on the identifier control instruction, in operation 513. For example, the client B deletes the identifier A from the contact registry based on the first instruction. In another example, the client B does not display the identifier A based on the second instruction. In this example, other identifiers are displayed in a contact list, whereas the identifier A is not displayed. In still another example, the client B may define state information of the identifier A as an offline state based on the third instruction. In this example, although the client A accesses the server and is in an online state, the client B may display, on a display, that the client A is in an offline state. The identifier A may be displayed as the offline state in the contact list.

### <Contact Backup>

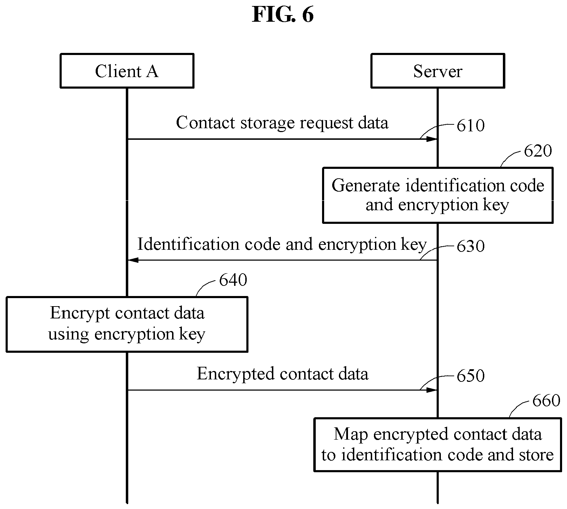

FIG. 6 is a flowchart illustrating an example of contact backup according to an embodiment.

Referring to FIG. 6, a client A transmits contact storage request data to a server, in operation 610. Here, the contact storage request data is request data to back up contact data including at least one identifier registered in a contact registry of the client A.

The server generates an identification code and an encryption key in response to the contact storage request data, in operation 620. The server transmits the identification code and the encryption key to the client A, in operation 630.

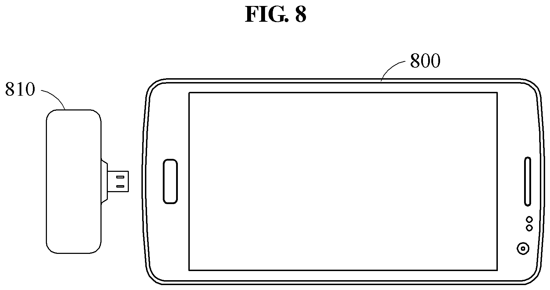

The client A may store the identification code and the encryption key in a memory of a terminal. Further, the client A may store the identification code and the encryption key in a physical storage device. The physical storage device may include, for example, a security call dongle of FIG. 8. Further, the client A may store the identification code and the encryption key in different storage devices separately. For example, the client A may store the identification code in the memory, and the encryption key in the security call dongle.

The client A may encrypt the contact data using the encryption key, in operation 640.

The client A transmits the encrypted contact data to the server, in operation 650.

The server may map the encrypted contact data to the identification code and store the same, in operation 660. The server may not store the encryption key according to a system policy. Accordingly, although the server is hacked and the encryption contact data is leaked, the encryption key to be used to decrypt the encrypted contact data may not be leaked, and thus the contact data may be safe.

### <Contact Restoration>

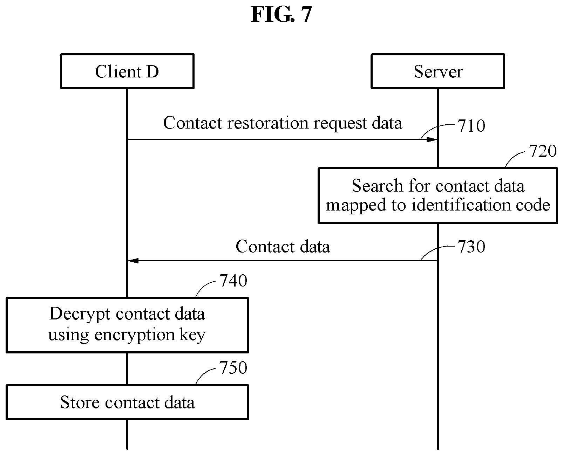

FIG. 7 is a flowchart illustrating an example of contact restoration according to an embodiment.

The client A of FIG. 6 may be deleted from the terminal. In this example, the contact data of the client A may be deleted. However, the identification code and the encryption key may not be deleted. Later, a client D, a new client, may be installed on the terminal. Here, since an identifier of the client D has not been assigned, the client D performs the identifier assignment process and the authentication process described with reference to FIG. 2 with the server.

A user of the terminal may restore a contact through the client D. Hereinafter, contact restoration will be described with reference to FIG. 7.

Referring to FIG. 7, the client D transmits contact restoration request data to the server, in operation 710. Here, the client D may transmit an identification code along with the contact restoration request data to the server. Depending on implementation, the identification code may be included in the contact restoration request data and transmitted to the server.

The server searches for contact data mapped to the identification code, in operation 720. Since the contact data of the client A of FIG. 6 is mapped to the identification code, the contact data of the client A may be included in a search result.

The server transmits found contact data to the client D, in operation 730.

The client D may decrypt the contact data using the encryption key, in operation 740.

The client D stores the contact data, in operation 750. Accordingly, although the client A is deleted, the contact data of the client A may be restored.

Although not shown in FIG. 7, the server may not have a record with respect to a contact of the client D. The client D may transmit a contact registration request to the server. In this example, the server may deem the identifier D the same as the identifier A and process the contact registration request.

FIG. 8 is a diagram illustrating an example of a security call dongle according to an embodiment.

Referring to FIG. 8, an example of a terminal 800 and a security call dongle 810 is illustrated.

The security call dongle 810 may be designed in a form attachable to and detachable from an input/output interface of the terminal 800. The input/output interface may include a micro universal serial bus (USB) port and a lightening port of Apple®. Further, the security call dongle 800 may be designed to be compatible with various input/output interfaces to be developed in the future.

The security call dongle 810 and the terminal 800 may be connected to each other through short range wireless communication without a physical contact. The short range wireless communication may include, for example, Bluetooth, near field communication (NFC), or wireless-fidelity (Wi-Fi). The short range wireless communication is not limited thereto.

The security call dongle 810 may include a memory with a predetermined capacity. At least one of a client, a contact registry of the client, a call history, and a messaging history, or a combination thereof may be stored in the memory.

The security call dongle 810 may include a battery with a predetermined capacity. In a case in which the battery of the terminal 800 is low, the security call dongle 810 may supply the terminal 800 with power sufficient to make a call for a predetermined time or longer.

When the security call dongle 810 is connected to the terminal 800, a client may be displayed visually on a display. In another example, when the security call dongle 810 is connected to the terminal 800, the client may be executed.

When the security call dongle 810 is connected to the terminal 800, the contact addition function of FIG. 3 may be performed.

The security call dongle 810 including a memory in which an identifier is stored may be distributed. In a case in which the client is installed on the terminal 800 and the security call dongle 810 is connected to the terminal 800, an identifier necessary for a security call may be assigned to the client.

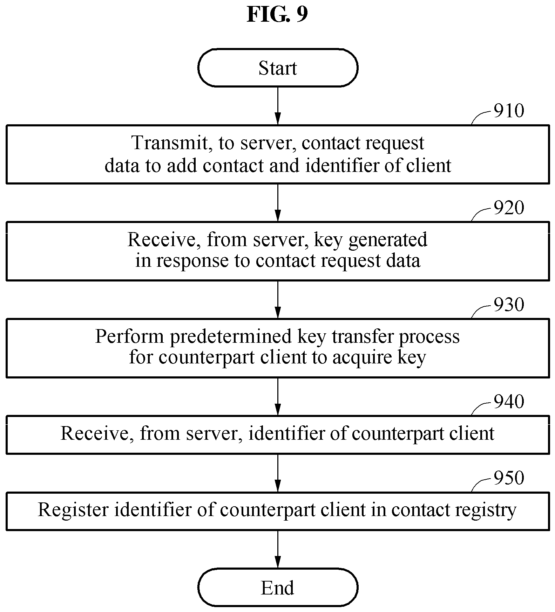

FIG. 9 is a flowchart illustrating an example of an operating method of a client according to an embodiment.

A client of FIG. 9 may correspond to the client A of FIGS. 3 through 7. However, the client of FIG. 9 is not limited thereto.

Referring to FIG. 9, the client transmits, to a server through a communication interface, contact request data to add a contact and an identifier of the client, in operation 910.

The client receives, from the server through the communication interface, a key generated in response to the contact request data. Here, the key is mapped to the identifier of the client.

The client performs a predetermined key transfer process for a counterpart client to acquire the key, in operation 930. When the counterpart client acquires the key, the counterpart client transmits the key and an identifier of the counterpart client to the server.

The client receives the identifier of the counterpart client from the server through the communication interface, in operation 940.

The client registers the identifier of the counterpart client in a contact registry, in operation 950.

The description provided with reference to FIGS. 1 through 8 is applied to the description of FIG. 9, and thus duplicated description will be omitted for conciseness.

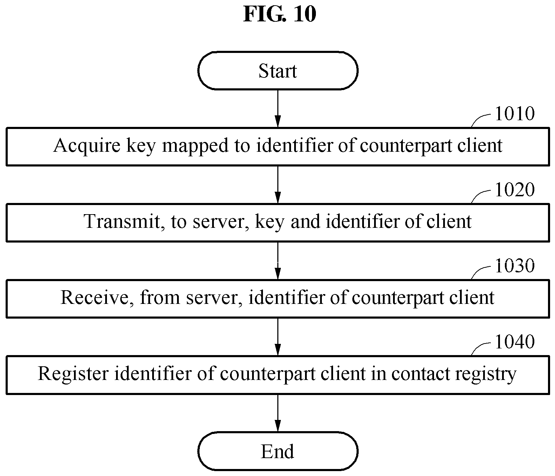

FIG. 10 is a flowchart illustrating another example of an operating method of a client according to an embodiment.

Referring to FIG. 10, a client acquires a key mapped to an identifier of a counterpart client, in operation 1010.

The client transmits, to a server through a communication interface, the key and an identifier of the client, in operation 1020.

The client receives, from the server through the communication interface, the identifier of the counterpart client, in operation 1030.

The client registers the identifier of the counterpart client in a contact registry, in operation 1040.

The description provided with reference to FIGS. 1 through 8 is applied to the description of FIG. 10, and thus duplicated description will be omitted for conciseness.

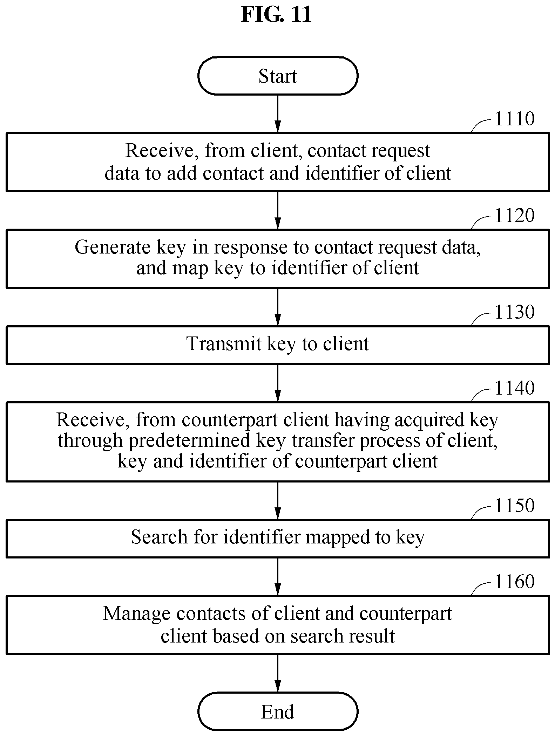

FIG. 11 is a flowchart illustrating an operating method of a server according to an embodiment.

Referring to FIG. 11, a server receives, from a client, contact request data to add a contact and an identifier of the client, in operation 1110.

The server generates a key in response to the contact request data, and maps the key to the identifier of the client, in operation 1120.

The server transmits the key to the client, in operation 1130.

The server receives, from a counterpart client having acquired the key through a predetermined key transfer process of the client, the key and an identifier of the counterpart client, in operation 1140.

The server searches for an identifier mapped to the key, in operation 1150.

The server manages contacts of the client and the counterpart client based on a search result, in operation 1160.

The description provided with reference to FIGS. 1 through 8 is applied to the description of FIG. 11, and thus duplicated description will be omitted for conciseness.

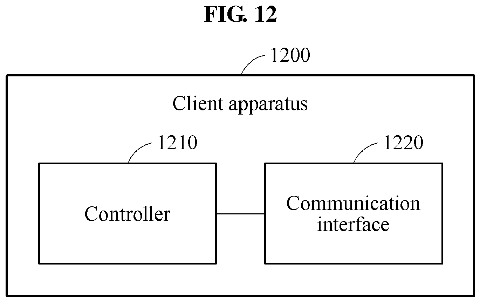

FIG. 12 is a block diagram illustrating an example of a client apparatus according to an embodiment.

Referring to FIG. 12, a client apparatus 1200 includes a controller 1210 and a communication interface 1220.

The communication interface 1220 communicates with a server. For example, the communication interface may include an interface for a wireless wide area network (WWAN) or a wireless local area network (WLAN). The WWAN may include one or a combination of a code division multiple access (CDMA) network, time division multiple access (TDMA) network, a frequency division multiple access (FDMA) network, an orthogonal frequency division multiple access (OFDMA) network, and/or a single-carrier frequency division multiple access (SC-FDMA) network. The WLAN may include an Institute of Electrical and Electronics Engineers (IEEE) 802.11x network. Further, the communication interface may include an interface enabling Bluetooth, radio frequency identification (RFID), infrared data association (IrDA), ultra wideband (UWB), ZigBee, near field communication (NFC), or Z-wave.

The controller 1210 transmits, to the server through the communication interface 1220, contact request data to add a contact and an identifier of a client. Here, the client may refer to a communication application stored in the client apparatus 1200.

The controller 1210 receives, from the server through the communication interface 1220, a key generated in response to the contact request data.

The controller 1210 performs a predetermined key transfer process for a counterpart client to acquire the key.

The controller 1210 receives, from the server through the communication interface 1220, an identifier of the counterpart client.

The controller 1210 registers the identifier of the counterpart client in a contact registry.

The description provided with reference to FIGS. 1 through 8 is applied to the description of FIG. 12, and thus duplicated description will be omitted for conciseness.

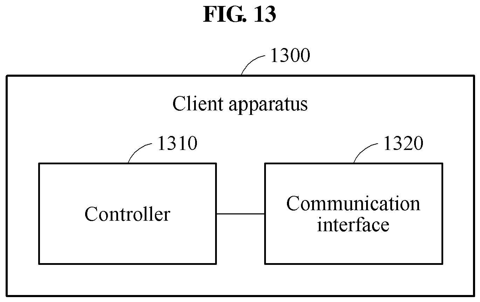

FIG. 13 is a block diagram illustrating another example of a client apparatus according to an embodiment.

Referring to FIG. 13, a client apparatus 1300 includes a controller 1310 and a communication interface 1320.

The communication interface 1320 communicates with a server. Types of the communication interface 1320 are described through FIG. 12, and thus duplicated description will be omitted for conciseness.

The controller 1310 acquires a key mapped to an identifier of a counterpart client.

The controller 1310 transmits, to the server through the communication interface 1320, the key and an identifier of a client.

The controller 1310 receives, from the server through the communication interface 1320, the identifier of the counterpart client.

The controller 1310 registers the identifier of the counterpart client in a contact registry.

The description provided with reference to FIGS. 1 through 8 is applied to the description of FIG. 13, and thus duplicated description will be omitted for conciseness.

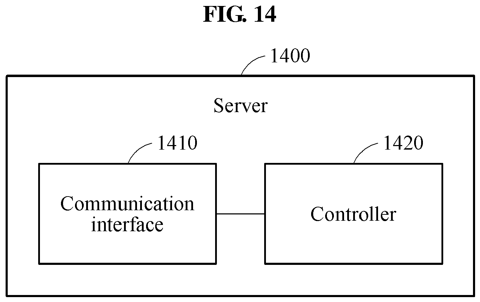

FIG. 14 is a block diagram illustrating an example of a server according to an embodiment.

Referring to FIG. 14, a server 1400 includes a communication interface 1410 and a controller 1420.

The communication interface 1410 communicates with a client and a counterpart client.

The controller 1420 receives, from the client through the communication interface 1410, contact request data to add a contact and an identifier of the client.

The controller 1420 generates a key in response to the contact request data, and maps the key to the identifier of the client.

The controller 1420 transmits the key to the client through the communication interface 1410. The counterpart client acquires the key through a predetermined key transfer process of the client.

The controller 1420 receives the key and an identifier of the counterpart client from the counterpart client through the communication interface 1410.

The controller 1420 searches for an identifier mapped to the key, and manages contacts of the client and the counterpart client based on a search result.

The description provided with reference to FIGS. 1 through 8 is applied to the description of FIG. 14, and thus duplicated description will be omitted for conciseness.

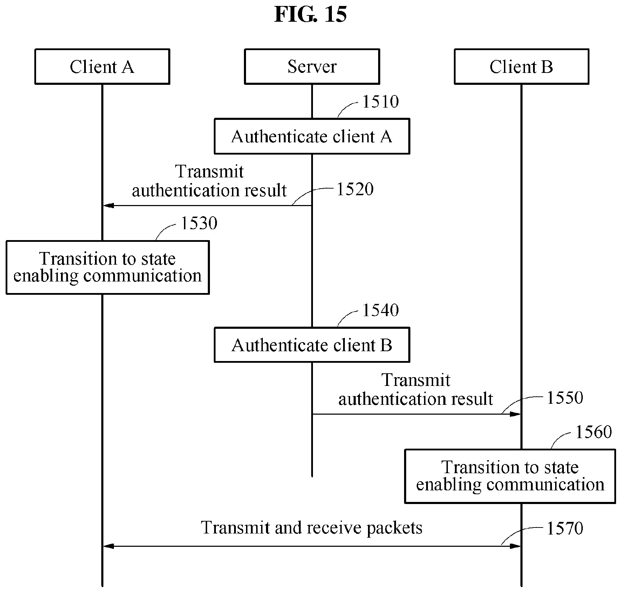

FIG. 15 is a flowchart illustrating still another example of an operating method of a client according to an embodiment.

Referring to FIG. 15, a server authenticates a client A, in operation 1510. An authentication result may be encrypted using a private key. The server may transmit the authentication result to the client A, in operation 1520.

The client A may decrypt the authentication result using the private key. When the client A is authenticated, the client A may transition to a state enabling communication, in operation 1530. The client A may transition to a state enabling P2P communication.

The server may authenticate a client B, in operation 1540. The server may transmit an authentication result to the client B, in operation 1550.

When the client B is authenticated, the client B may transition to a state enabling communication. The client B may transition to a state enabling P2P communication.

The client A may transmit, to the server, a request to perform P2P communication with the client B. The server may find the client B, and transmit the P2P communication request of the client A to the client B. Accordingly, the client A and the client B may be directly connected and perform direct communication. That is, the client A and the client B may perform P2P communication. In this example, the client A and the client B may transmit and receive packets encrypted using a security key, in operation 1570.

The description provided with reference to FIGS. 1 through 14 is applied to the description of FIG. 15, and thus duplicated description will be omitted for conciseness.

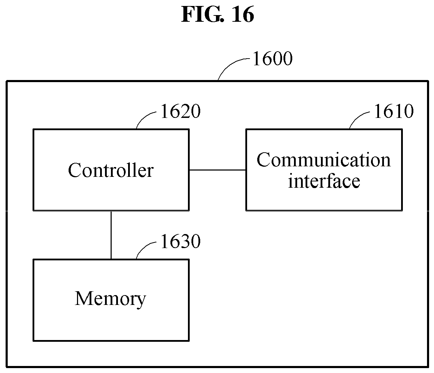

FIG. 16 is a block diagram illustrating another example of a server according to an embodiment.

Referring to FIG. 16, a server 1600 includes a communication interface 1610, a controller 1620, and a memory 1630.

The communication interface 1610 communicates with a client.

The server 1600 supports P2P communication of the client. Hereinafter, an operation of the server 1600 to support P2P communication of the client will be described.

The controller 1620 issues a public key in response to a public key request received from the client, and the communication interface 1610 transmits the public key to the client.

The communication interface 1610 receives a private key from the client, and the controller 1620 maps the public key and the private key as a key pair. The controller 1620 may store the key pair in the memory 1630.

The communication interface 1610 may transmit a key pair generation message to the client, and the client may confirm the generation of the key pair.

The client transmits, to the server 1600, an identifier generation request including at least one piece of unique information of the client.

The communication interface 1610 receives the identifier generation request, and the controller 1620 generates an identifier corresponding to the client in response to the identifier generation request. Further, the controller 1620 generates a security key using the unique information included in the identifier generation request. The communication interface 1610 transmits the identifier and the security key to the client.

The client transmits, to the server 1600, an authentication request including the identifier and the security key, and the communication interface 1610 receives the authentication request.

The controller 1620 authenticates the client in response to the authentication request, and the communication interface 1610 transmits an authentication result to the client. When the client is authenticated, the client transitions to a state enabling communication with another client. In a case in which the client and the other client are authenticated, the client and the other client may enter an operating mode enabling P2P communication or direct communication therebetween.

The server 1600 may generate a question for the client to maintain a user datagram protocol (UDP) session. The server 1600 may embed a hash index in the question. The server 1600 may transmit the question to the client.

When the client receives the question, the client may generate an answer. Here, in a case in which the answer corresponds to the question, the UDP session may be maintained. In a case in which the answer does not correspond to the question, the UDP session may not be maintained and may be closed.

A hash index may be embedded in the generated answer. The client may transmit, to the server 1600, the answer in which the hash index is embedded.

The server 1600 may verify the answer of the client. The server 1600 may acquire the hash index from the answer. For example, the server 1600 may acquire the hash index by performing XOR operation with respect to bytes included in the answer. To maintain the UDP session, the server 1600 may verify the identifier of the client. Since the server 1600 acquires the hash index, the server may access a database in which identifiers are stored using the hash index. The database may transmit an identifier corresponding to the hash index to the server 1600. Thus, the server 1600 may identify the client through a response to a query based on the hash index, without receiving the identifier from the client, thereby identifying the client more quickly. Therefore, validation of the UDP session may be confirmed more quickly, and the UDP session may be maintained. Further, although an IP address of the client is changed, the server 1600 may quickly identify the client based on the hash index. Thus, even in an environment in which an IP changes like P2P communication, validation of a UDP session may be confirmed and the UDP session may be maintained.

The description provided with reference to FIGS. 1 through 15 is applied to the description of FIG. 16, and thus duplicated description will be omitted for conciseness.

The units described herein may be implemented using hardware components and software components. For example, the hardware components may include microphones, amplifiers, band-pass filters, audio to digital converters, non-transitory computer memory and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums. The non-transitory computer readable recording medium may include any data storage device that can store data which can be thereafter read by a computer system or processing device. Examples of the non-transitory computer readable recording medium include read-only memory (ROM), random-access memory (RAM), CD-ROMs, magnetic tapes, floppy disks, optical data storage devices. Also, functional programs, codes, and code segments that accomplish the examples disclosed herein can be easily construed by programmers skilled in the art to which the examples pertain based on and using the flow diagrams and block diagrams of the figures and their corresponding descriptions as provided herein.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. An operating method of a server that supports peer-to-peer, P2P, communication, the operating method comprising:
issuing (221) a public key in response to a public key request received from a client, and transmitting (222) the public key to the client;
receiving (213) a private key encrypted with the public key from the client and decrypting the private key using the public key;
receiving (215), from the client, an identifier generation request including at least one piece of unique information of the client encrypted with the private key and decrypting the request using the private key;
generating (226) an identifier corresponding to the client at random in response to the identifier generation request, generating (226) a security key by modifying the at least one piece of unique information, and transmitting (227) the identifier and the security key to the client;
receiving (217), from the client, an authentication request including the identifier and the security key; and
authenticating (228) the client based on the received identifier and the received security key, and transmitting an authentication result to the client,
wherein the client is configured to transition to a state enabling P2P communication with another client using the identifier based on the authentication result when the client is authenticated, and to transmit data encrypted by the security key to the other client.

2. The operating method of claim 1, wherein the at least one piece of unique information comprises a device unique key corresponding to a physical device of the client and a manufacturing key corresponding to the client.

3. The operating method of claim 2, wherein the security key is generated based on at least one of the device unique key and the manufacturing key.

4. The operating method of claim 1, wherein the identifier is one of n-digit random values, n^n, generated based on n pieces of discrimination information.

5. The operating method of claim 1, wherein a hash index is embedded in the identifier.

6. The operating method of claim 1, wherein a list of one or more other clients authenticated by the server is displayed in the client, and the client transmits and receives packets encrypted using the security key to and from the one or more other clients.

7. The operating method of claim 1, wherein a key pair of the public key and the private key is stored in at least one of the server and the client.

8. An operating method of a client that supports peer-to-peer, P2P, communication, the operating method comprising:
transmitting (211) a public key request to a server;
receiving (222), from the server, a public key corresponding to the public key request, and generating (212) a private key;
transmitting (213) the private key encrypted with the public key to the server;
transmitting (215), to the server, an identifier generation request including at least one piece of unique information of the client encrypted with the private key;
receiving (227), from the server, an identifier generated at random corresponding to the identifier generation request and a security key generated by modifying the at least one piece of unique information;
transmitting (217), to the server, an authentication request including the identifier and the security key;
receiving (229), from the server, an authentication result based on the identifier and security key corresponding to the authentication request; and
transitioning to a state enabling P2P communication with another client using the identifier when the client is authenticated based on the identifier and the security key included in the authentication request, and transmitting data encrypted by the security key to the other client.

9. The operating method of claim 8, wherein the at least one piece of unique information comprises a device unique key corresponding to a physical device of the client and a manufacturing key corresponding to communication software to run on the client.

10. The operating method of claim 9, wherein the security key is generated based on at least one of the device unique key and the manufacturing key.

11. The operating method of claim 8, wherein the identifier is one of n-digit random values, n^n, generated based on n pieces of discrimination information.

12. The operating method of claim 8, wherein a hash index is embedded in the identifier.

13. The operating method of claim 8, wherein a list of one or more other clients authenticated by the server is displayed in communication software to run on the client, and the client transmits and receives packets encrypted using the security key to and from the one or more other clients.

14. The operating method of claim 8, wherein a key pair of the public key and the private key is stored in at least one of the server and the client.

## Patentansprüche

1. Betriebsverfahren für einen Server, der eine Peer-to-Peer, P2P,-Kommunikation unterstützt, wobei das Betriebsverfahren umfasst:
Ausgeben (221) eines öffentlichen Schlüssels in Reaktion auf eine Anforderung eines öffentlichen Schlüssels von einem Client, und Übertragen (222) des öffentlichen Schlüssels an den Client;
Empfangen (213) eines privaten Schlüssels, der mit dem öffentlichen Schlüssel verschlüsselt ist, von dem Client und Entschlüsseln des privaten Schlüssels unter Verwendung des öffentlichen Schlüssels;
Empfangen (215), von dem Client, einer Identifikator-Erzeugungs-Anforderung, die mindestens ein Stück eindeutiger Information des Clients enthält, die mit dem privaten Schlüssel verschlüsselt ist und Entschlüsseln der Anforderung unter der Verwendung des privaten Schlüssels;
Erzeugen (226) eines Identifikators, der dem Client entspricht, nach dem Zufallsprinzip in Reaktion auf die Identifikator-Erzeugungs-Anforderung, Erzeugen (226) eines Sicherheitsschlüssels durch Modifizieren des mindestens einen Stücks eindeutiger Information, und Übertragen (227) des Identifikators und des Sicherheitsschlüssels an den Client;
Empfangen (217), von dem Client, einer Authentifizierungsanforderung, die den Identifikator und den Sicherheitsschlüssel enthält; und
Authentifizieren (228) des Clients auf Basis des empfangenen Identifikators und des empfangenen Sicherheitsschlüssels, und Übertragen des Authentifikationsergebnisses an den Client,
wobei der Client dazu konfiguriert ist, in einen Zustand überzugehen, der eine P2P-Kommunikation mit einem anderen Client unter der Verwendung des Identifikators auf Basis des Authentifizierungsergebnisses ermöglicht, wenn der Client authentifiziert ist, und mit dem Sicherheitsschlüssel verschlüsselte Daten an den anderen Client zu übertragen.

2. Betriebsverfahren gemäß Anspruch 1, wobei das mindestens eine Stück eindeutiger Information einen geräteeindeutigen Schlüssel, der einem physischen Gerät des Clients entspricht, und einen Herstellungsschlüssel, der dem Client entspricht, umfasst.

3. Betriebsverfahren gemäß Anspruch 2, wobei der Sicherheitsschlüssel auf mindestens einem aus dem geräteeindeutigen Schlüssel und dem Herstellungsschlüssel basiert.

4. Betriebsverfahren gemäß Anspruch 1, wobei der Identifikator eine aus n-stelligen Zufallszahlen, n^n, ist, die auf Basis von Stücken von Unterscheidungsinformationen generiert werden.

5. Betriebsverfahren gemäß Anspruch 1, wobei ein Hash-Index in dem Identifikator eingebettet ist.

6. Betriebsverfahren gemäß Anspruch 1, wobei eine Liste eines oder mehrerer anderer Clients, die von dem Server authentifiziert wurden, in dem Client angezeigt wird, und der Client Pakete, die unter der Verwendung des Sicherheitsschlüssels verschlüsselt wurden, an den einen oder die mehreren anderen Clients sendet und von diesen empfängt.

7. Betriebsverfahren gemäß Anspruch 1, wobei ein Schlüsselpaar aus dem öffentlichen Schlüssel und dem privaten Schlüssel in mindestens einem aus dem Server und dem Client gespeichert wird.

8. Betriebsverfahren eines Client, der Peer-to-Peer, P2P,-Kommunikation (Peer-to-Peer) unterstützt, wobei das Betriebsverfahren umfasst:
Übertragen (211) einer Anforderung nach einem öffentlichen Schlüssel an einen Server;
Empfangen (222), von dem Server, eines öffentlichen Schlüssels, der der Anforderung nach dem öffentlichen Schlüssel entspricht, und Erzeugen (212) eines privaten Schlüssels;
Übertragen (213) des privaten Schlüssels, der mit dem öffentlichen Schlüssel verschlüsselt wurde, an den Server;
Übertragen (215), an den Server, einer Identifikator-Erzeugungs-Anforderung, die mindestens ein Stück eindeutiger Information des Clients enthält, die mit dem privaten Schlüssel verschlüsselt ist;
Empfangen (227), von dem Server, eines Identifikators, der nach dem Zufallsprinzip erzeugt wurde, die der Identifikator-Erzeugungs-Anforderung entspricht, und eines Sicherheitsschlüssels, der durch Modifizieren des mindestens einen Stücks eindeutiger Information erzeugt wurde;
Übertragen (217), an den Server, einer Authentifizierungsanforderung, die den Identifikator und den Sicherheitsschlüssel enthält;
Empfangen (229), von dem Server, eines Authentifikationsergebnisses, das auf dem Identifikator und dem Sicherheitsschlüssel basiert, der der Authentifizierungsanforderung entspricht; und
Übergehen in einen Zustand, der eine P2P-Kommunikation mit einem anderen Client unter der Verwendung des Identifikators ermöglicht, wenn der Client auf Basis des Identifikators und des Sicherheitsschlüssels, die in der Authentifizierungsanforderung enthalten sind, authentifiziert ist, und Übertragen von mit dem Sicherheitsschlüssel verschlüsselter Daten an den anderen Client.

9. Betriebsverfahren gemäß Anspruch 8, wobei das mindestens eine Stück eindeutiger Information einen geräteeindeutigen Schlüssel, der einem physischen Gerät des Clients entspricht, und einen Herstellungsschlüssel umfasst, der einer Kommunikationssoftware zum auf dem Client Ausführen entspricht.

10. Betriebsverfahren gemäß Anspruch 9, wobei der Sicherheitsschlüssel auf mindestens eines aus dem geräteeindeutigen Schlüssel und dem Herstellungsschlüssel basiert.

11. Betriebsverfahren gemäß Anspruch 8, wobei der Identifikator eine aus n-stelligen Zufallszahlen, n^n, ist, die auf Basis von Stücken von Unterscheidungsinformationen generiert werden.

12. Betriebsverfahren gemäß Anspruch 8, wobei ein Hash-Index in dem Identifikator eingebettet ist.

13. Betriebsverfahren gemäß Anspruch 8, wobei eine Liste eines oder mehrerer anderer Clients, die von dem Server authentifiziert wurden, in Kommunikationssoftware zum Ausführen auf dem Client angezeigt wird und der Client Pakete, die unter der Verwendung des Sicherheitsschlüssels verschlüsselt wurden, an den einen oder die mehreren anderen Clients sendet und von diesen empfängt.

14. Betriebsverfahren gemäß Anspruch 8, wobei ein Schlüsselpaar aus dem öffentlichen Schlüssel und dem privaten Schlüssel in mindestens einem aus dem Server und dem Client gespeichert wird.

## Revendications

1. Procédé d'exploitation d'un serveur qui supporte la communication pair-à-pair P2P, le procédé d'exploitation comprenant :
l'émission (221) d'une clé publique en réponse à une demande de clé publique reçue en provenance d'un client, et la transmission (222) de la clé publique au client ;
la réception (213) d'une clé privée cryptée avec la clé publique en provenance du client et le décryptage de la clé privée à l'aide de la clé publique ;
la réception (215) en provenance du client d'une demande de production d'identifiant incluant au moins un élément d'information unique du client crypté avec la clé privée et le décryptage de la demande à l'aide de la clé privée ;
la production (226) d'un identifiant correspondant au client de façon aléatoire en réponse à la demande de production d'identifiant, la production (226) d'une clé de sécurité par modification de l'élément d'information unique au moins au nombre de un, et la transmission (227) de l'identifiant et de la clé de sécurité au client ;
la réception (217) en provenance du client d'une demande d'authentification incluant l'identifiant et la clé de sécurité ; et
l'authentification (228) du client sur la base de l'identifiant reçu et de la clé de sécurité reçue, et la transmission d'un résultat d'authentification au client,
dans lequel le client est configuré pour transiter vers un état permettant une communication P2P avec un autre client à l'aide de l'identifiant sur la base du résultat d'authentification quand le client est authentifié, et pour transmettre à l'autre client des données cryptées par la clé de sécurité.

2. Procédé d'exploitation selon la revendication 1, dans lequel l'élément d'information unique au moins au nombre de un comprend une clé unique de dispositif correspondant à un dispositif physique du client et une clé de fabrication correspondant au client.

3. Procédé d'exploitation selon la revendication 2, dans lequel la clé de sécurité est produite sur la base d'au moins une clé parmi la clé unique de dispositif et la clé de fabrication.

4. Procédé d'exploitation selon la revendication 1, dans lequel l'identifiant est une valeur parmi des valeurs aléatoires à n chiffres, n^n, produites sur la base de n éléments d'information de discrimination.

5. Procédé d'exploitation selon la revendication 1, dans lequel un index de hachage est intégré dans l'identifiant.

6. Procédé d'exploitation selon la revendication 1, dans lequel une liste d'un ou de plusieurs autres clients authentifiés par le serveur est affichée dans le client, et le client transmet et reçoit des paquets cryptés à l'aide de la clé de sécurité vers et en provenance du ou des plusieurs autres clients.

7. Procédé d'exploitation selon la revendication 1, dans lequel une paire de clés de la clé publique et de la clé privée est enregistrée dans au moins une entité parmi le serveur et le client.

8. Procédé d'exploitation d'un client qui supporte la communication pair-à-pair P2P, le procédé d'exploitation comprenant :
la transmission (211) à un serveur d'une demande de clé publique ;
la réception (222) en provenance du serveur d'une clé publique correspondant à la demande de clé publique, et la production (212) d'une clé privée ;
la transmission (213) au serveur de la clé privée cryptée avec la clé publique;
la transmission (215) au serveur d'une demande de production d'identifiant incluant au moins un élément d'information unique du client crypté avec la clé privée ;
la réception (227) en provenance du serveur d'un identifiant produit de façon aléatoire correspondant à la demande de production d'identifiant et d'une clé de sécurité produite en modifiant l'élément d'information unique au moins au nombre de un ;
la transmission (217) au serveur d'une demande d'authentification incluant l'identifiant et la clé de sécurité ;
la réception (229) en provenance du serveur d'un résultat d'authentification sur la base de l'identifiant et de la clé de sécurité correspondant à la demande d'authentification ; et
la transition vers un état permettant la communication P2P avec un autre client à l'aide de l'identifiant quand le client est authentifié sur la base de l'identifiant et de la clé de sécurité inclus dans la demande d'authentification, et la transmission à l'autre client de données cryptées par la clé de sécurité.

9. Procédé d'exploitation selon la revendication 8, dans lequel l'élément d'information unique au moins au nombre de un comprend une clé unique de dispositif correspondant à un dispositif physique du client et une clé de fabrication correspondant à un logiciel de communication destiné à être exécuté sur le client.

10. Procédé d'exploitation selon la revendication 9, dans lequel la clé de sécurité est produite sur la base d'au moins une clé parmi la clé unique de dispositif et la clé de fabrication.

11. Procédé d'exploitation selon la revendication 8, dans lequel l'identifiant est une valeur parmi des valeurs aléatoires à n chiffres, n^n, produites sur la base de n éléments d'information de discrimination.

12. Procédé d'exploitation selon la revendication 8, dans lequel un index de hachage est intégré dans l'identifiant.

13. Procédé d'exploitation selon la revendication 8, dans lequel une liste d'un ou de plusieurs autres clients authentifiés par le serveur est affichée dans un logiciel de communication destiné à être exécuté sur le client, et le client transmet et reçoit des paquets cryptés à l'aide de la clé de sécurité vers et en provenance du ou des plusieurs autres clients.

14. Procédé d'exploitation selon la revendication 8, dans lequel une paire de clés de la clé publique et de la clé privée est enregistrée dans au moins une entité parmi le serveur et le client.
